# EUROPÄISCHE PATENTSCHRIFT

(11) **EP 1 333 214 B1**
(45) Veröffentlichungstag und Bekanntmachung des Hinweises auf die Patenterteilung: **02.11.2006**
(21) Anmeldenummer: 03002015.0
(22) Anmeldetag: 28.01.2003
(51) Int. Cl.: F16L 25/00

(54) **Anschlusseinrichtung zum wasserdichten Anschliessen eines Wellrohres**
Connector for water-tight connection of a corrugated pipe
Raccord pour le raccordement étanche d'un tuyau ondulé

(30) Priorität: 30.01.2002 DE 10203573
(43) Veröffentlichungstag der Anmeldung: 06.08.2003
(73) Patentinhaber: Fränkische Rohrwerke Gebr. Kirchner GmbH + Co KG, 97486 Königsberg/Bayern (DE)
(72) Erfinder: Büttner, Matthias, 97486 Königsberg (DE)
(74) Vertreter: Schwabe - Sandmair - Marx

(56) Entgegenhaltungen:
- DE-A- 19 803 767
- DE-U- 20 113 500
- DE-U- 29 716 066
- GB-A- 2 107 814

## Beschreibung

Die Erfindung betrifft eine Anschlusseinrichtung zum wasserdichten Anschluss eines Wellrohres bezüglich eines Haushaltsgerätes gemäß dem Oberbegriff des Patentanspruchs 1. Ferner wird eine Anordnung gemäß dem Anspruch 9 sowie eine Verwendung gemäß dem Anspruch 10 offenbart.

Im Stand der Technik sind Anschlusseinrichtungen zum wasserdichten Anschließen eines Wellrohres bezüglich eines Haushaltsgerätes bekannt, wobei hier jedoch das Wellrohr in seinem Anschlussbereich an eine Anschlusseinrichtung der bekannten Art angepasst ist. Hier gibt es zwei bekannte Techniken, um Wellrohre mit Anschlusseinrichtungen zu verbinden. Gemäß der einen wird auf ein Ende eines Wellrohres eine Gummitülle aufgespritzt, was eine sehr zeitaufwändige und kostspielige Technik ist, die jedoch beständig wasserdichte Verbindungen zur Verfügung stellt.

Eine andere Variante betrifft Wellrohre, deren Enden mit einer speziellen Geometrie versehen werden, was während des Korrugationsprozesses geschehen muss, falls die betreffenden Wellrohre nicht mittels einer Spritzgusstechnik hergestellt werden, was ebenfalls eine sehr kostspielige und zeitaufwändige Art der Herstellung ist. Wird das bekannte Wellrohr mit dem Anschlussabschnitt mittels eines Korrugators hergestellt, lassen sich nicht beliebig lange Wellrohrabschnitte herstellen, sondern nur Wellrohrabschnitte mit bestimmter Länge, da das Einfügen von entsprechend modifizierten Formbacken in eine Formbackenkette eines Wellrohrkorrugators nur die Herstellung entsprechender Verbindungsabschnitte in bestimmten, diskreten Abständen zulässt.

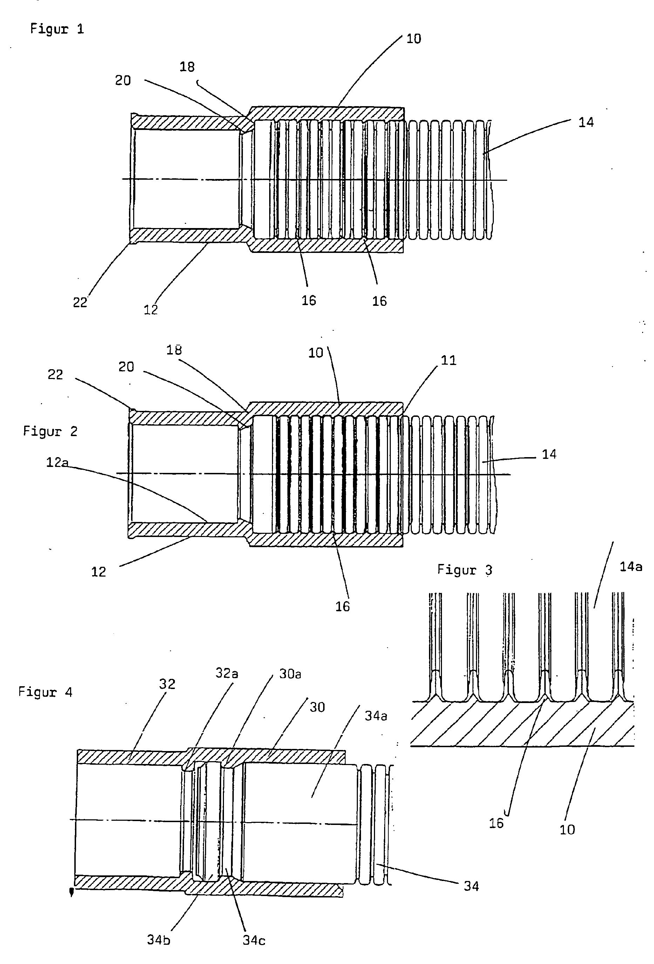

Die bekannte Form der Herstellung einer wasserdichten Wellrohranbindung soll unter Bezugnahme auf Fig. 4 erläutert werden, die Stand der Technik darstellt. Ein Wellrohr 34 ist hier anschlussseitig mit einem wellungsfreien Anschlussabschnitt 34a ausgebildet, an den vom Wellrohr 34 abgewandt ein Rastabschnitt 34b mit einer Verrastungsnut 34c anschließt. Die Herstellung dieses Verbindungsbereiches 34a, 34b, 34c erfordert während der Herstellung eine Verlangsamung der Abzugsgeschwindigkeit vom Korrugator, und da nur konkrete Längen von Wellrohren mit solchen Verbindungsbereichen für bestimmte Zwecke hergestellt werden können, muss die Wellrohrreststrecke, die ein Korrugator herstellt, abgeschnitten werden, und kann lediglich als Abfallmaterial bzw. als Recycelmaterial verwendet werden, was den Herstellungsprozess sehr verteuert.

Entsprechend zu der Ausbildung des Verbindungsbereiches 34a, 34b, 34c am Ende des Wellrohres 34 ist die Tülle 30, 32 ausgebildet. Im wellrohrseitigen Anschlussbereich ist innenumfänglich eine Rastrippe 30a vorgesehen, die in die Verrastungsnut 34c am Wellrohrende eingreift. Ein vom Wellrohr 34 abgewandter Abschnitt 32 kann beispielsweise auf einen Anschlussstutzen etwa einer Wascheinheit einer Waschmaschine, einer Geschirrspülmaschine, einer Wäscheschleuder, eines Dampfgarers oder einer sonstigen Einrichtung aufgeschoben werden, die eine wasserdichte Anbindung erforderlich macht.

Die DE-U-297 16 066 zeigt eine weitere, gattungsbildende Anschlusseinrichtung, bei der die radial einwärts weisenden Erstreckungen des Anschlussstutzens jeweils zwei Schrägen mit unterschiedlichen Winkeln zur Milttelachse des Anschlussstutzens aufweisen.

Es ist die Aufgabe gemäß der vorliegenden Erfindung, den oben aufgezeigten Nachteilen des Standes der Technik Abhilfe zu verschaffen. Insbesondere soll eine Anschlusseinrichtung zur Verfügung gestellt werden, die den Anschluss eines Endloswellrohres ermöglicht, ohne dass dieses Endloswellrohr bereichsweise modifiziert werden muss, beispielsweise durch im Korrugationsprozess eingeformte Bereiche oder durch Anspritzen von speziellen Anschlussbereichen.

Gemäß der vorliegenden Erfindung wird wenigstens eine der obigen Aufgaben durch wenigstens einen der Gegenstände der unabhängigen Patentansprüche gelöst.

Zweckmäßige Ausführungsformen des erfindungsgemäßen Gegenstandes gehen aus den Unteransprüchen hervor.

Die gemäß der Erfindung erzielbaren Vorteile beruhen darauf, dass eine Anschlusseinrichtung in Bezug auf ihren wellrohrseitigen Anschlussstutzen weiter entwickelt wird, indem mehrere radial einwärts ragende Erstreckungen innenumfänglich am wellrohrseitigen Anschlussstutzen vorgesehen werden, wobei die Erstreckungen in Umfangsrichtung wenigstens teilweise durchgängig sind.

Eine besonders vorteilhafte Ausführungsform ergibt sich, wenn die Erstreckungen so dimensioniert sind, dass diese auf wenigstens einer Seite, bevorzugt auf beiden Seiten eines Wellentales bevorzugt unter Spannung die Wellungsflanken der Wellungen des Wellrohres berühren bzw. in die Wellentäler entsprechend eingreifen.

Gernäß einer anderen Ausführungsform wird ein Wellrohr, das die zu dem Innenumfang des Anschlussabschnittes korrespondierenden Außenkonturen aufweist, in den wellrohrseitigen Anschlussstutzen eingeschoben. Bei dem Prozess des Aufschiebens kann das Wellrohr einwärts komprimiert werden und/oder der wellrohrseitige Anschlussstutzen kann radial auswärts aufgeweitet werden. Im Endstadium der Montage bzw. des Einführens des Wellrohres in den Anschlussstutzen greifen die vorhandenen radial einwärts weisenden Erstreckungen in die Wellentäler des eingeführten Abschnittes des Wellrohres ein und halten dieses wasserdicht fest.

Dabei kann es ausreichen, wenn jedes zweite oder dritte Wellental des in den Anschlussstutzen eingeführten Bereiches des Wellrohres mit einer korrespondierenden Erstreckung im Eingriff ist. Bevorzugt wird es, wenn in fast jedes oder jedes Wellental eine Erstreckung eingreift. Ferner wird es bevorzugt, wenn diese Erstreckungen vollumfänglich am Innenumfang des Anschlussstutzens vorgesehen sind, um nicht nur eine große Haltekraft, sondern auch eine gesteigerte Dichtwirkung zu erhalten.

Auch ist es möglich, die Dichtwirkung dadurch bereitzustellen, dass die Wellenberge in eine stramme, dichtende Anlage zu dem Innenumfang des Anschlussstutzens gebracht werden, wobei die radial einwärts weisenden Erstreckungen lediglich die erforderliche Haltekraft aufbringen.

Natürlich können die Maßnahmen auch miteinander kooperierend realisiert werden.

Bevorzugt ist zwischen dem dem Wellrohr abgewandten Abschnitt und dem Anschlussstutzen ein Anschlagabschnitt ausgebildet. Dieser begrenzt in Aufschubrichtung die Kavität, die das Ende des Wellrohres aufnimmt. Hieran kann dann beispielsweise über einen Querschnittsanpassungsbereich der vom Wellrohr abgewandete Abschnitt anschließen, der beispielsweise auf einem Anschlussstutzen eines Haushaltsgerätes oder innerhalb eines Haushaltsgerätes für eine wasserdichte Verbindung aufgeschoben oder in diese eingeschoben werden kann. Der Querschnittsanpassungsbereich kann unterschiedliche Durchmesser des wellrohrseitigen Anschlussstutzens an den von dem Wellrohr abgewandten Abschnitt anpassen, beispielsweise über eine konische Verengung oder dgl., was dazu beitragen kann, Strömungsgeräusche des Wassers innerhalb der Maschine zu verringern, was beispielsweise bei Spülmaschinen, Waschmaschinen oder dgl. zu geringeren Arbeitsgeräuschen führen kann.

Vorteilhafterweise weist der dem Wellrohr abgewandte Abschnitt eine Verbindungsstruktur bzw. -kontur auf, etwa eine Rastschulter, ein Verhakungsprofil und/oder dgl., um den besagten Abschnitt fester an die anzuschließende Maschine anschließen zu können.

Erfindungsgemäß wird auch eine Anordnung einer Anschlusseinrichtung gemäß der Erfindung bzw. gemäß einer der bevorzugten Ausführungsformen an ein Endloswellrohr beliebiger Länge beansprucht, d.h., das festzulegende Wellrohr kann endlos hergestellt werden und es ist nicht erforderlich, bestimmte Anschlussbereiche in der in Fig. 4 dargestellten Weise an einem Wellrohrende oder beiden Wellrohrenden auszubilden, was die Fertigung insgesamt sehr vereinfacht und damit kostengünstiger macht. Auch die manuelle Tätigkeit des Anschließens wird hierdurch sehr verbessert, wobei dennoch die gewünschte Wasserdichtigkeit erzielt werden kann.

Gemäß der Erfindung ist diese auch in der Verwendung eines wasserführenden Endloswellrohres zur Herstellung einer wasserdichten Verbindung bei Haushaltsgeräten mit einer Anschlusseinrichtung gemäß der Erfindung zu erkennen. Dabei ist in Betracht zu ziehen, dass es sich bei den erfindungsgemäßen Gegenständen um Massenartikel handelt, bei denen bei den Herstellungskosten um jeden Bruchteil eines Cents bei der Kosteneinsparung gerungen wird. Gemäß der Erfindung können nicht nur Bruchteile von Cents eingespart werden, sondern bedeutend mehr.

Damit lassen sich gemäß der Erfindung diverse Vorteile erzielen, worunter z.B. eine schnellere Produktionsgeschwindigkeit für das Wellrohr fällt. Diese wird ermöglicht, da keine Anschlussbereiche, d.h. Stutzen oder dgl. nötig sind, die zuvor die Laufgeschwindigkeit für den Extrusions- und Korrugationsprozess beschränkten. Ferner ist gemäß der Erfindung nunmehr eine Fertigung des Wellrohres ohne Sonderstrukturen, ohne Stutzen oder dgl. möglich, was dazu führt, dass kein Abfall produziert wird. Des Weiteren ist jede Länge realisierbar, da keine Stutzen mehr ausgebildet werden müssen. Die Dichtwirkung der erfindungsgemäßen Anschlusseinrichtung bzw. des erfindungsgemäßen Gegenstandes ist optimal und ohne weitere Maßnahmen wird eine bessere und dauerhafte Dichtigkeit erzielt, als bei den aus dem Stand der Technik bekannten Verbindungstechniken. Die Montage ist relativ einfach, weil beim Einstecken des Endloswellrohrendes in die erfindungsgemäße Anschlusseinrichtung die lediglich radial gering einwärts erstreckten Erstreckungen sehr leicht in die zugeordneten Wellentäler hineingeführt werden können. Durch das immer nacheinander auftretende Kollidieren eines Wellenberges bzw. einer Wellenflanke mit einer der radial umfänglich angeordneten Erstreckungen, sind beim Aufstecken nur die Kräfte von wenigen der mehreren Erstreckungen, im Idealfall immer jeweils von einer der mehreren Erstreckungen zu überwinden, während beim Abziehen große Auszugskräfte aufzubringen sind, da sämtliche Erstreckungen in Verbindung mit sämtlichen zugeordneten Wellentälern kumulativ zu einem sehr hohen Widerstand und damit zu einer großen Auszugskraft führen. Abzugskräfte von größer als 200 n sind gemessen worden. Auch die Herstellungskosten und insbesondere die Werkzeugkosten können niedrig gehalten werden da keine Stutzen für das Rohre mehr erforderlich sind. Ferner sind keine unterschiedlichen Stutzen bei verschiedenen Rohrlängen mehr erforderlich. Die Dichtwirkung kann unabhängig von der Nennweite optimiert werden.

Nachfolgend wird die vorliegende Erfindung unter Bezugnahme auf die beigefügten Figuren anhand zweier Ausführungsformen näher beschrieben, wobei weitere Vorteile, Merkmale und Zielsetzungen gemäß der Erfindung offenbart werden. In den Darstellungen zeigen:
- Fig. 1: einen Längsschnitt durch eine Anschlusseinrichtung gemäß der Erfindung mit einer Seitenansicht eines eingebauten Wellrohres;
- Fig. 2: eine Ausführungsform gemäß der Erfindung in einer Darstellung gemäß Fig. 1;
- Fig. 3: einen Ausschnitt eines Verbundes zwischen einer Anschlusseinrichtung und einem Endlosrohr in einer teilweisen Schnittdarstellung; und
- Fig. 4: eine Ausführungsform gemäß dem Stand der Technik.

In den Figuren, die die Erfindung darstellen, sind gleich oder wenigstens funktionsgleiche Bestandteile mit den gleichen Bezugszeichen gekennzeichnet.

In Fig. 1 ist ein axialer Längsschnitt durch eine Anschlusseinrichtung mit Merkmalen gemäß der Erfindung dargestellt, wobei in einem wellrohrseitigen Anschlussstutzen 10 ein Ende eines Wellrohres 14 eingesteckt ist. An den Anschlussstutzen 10 schließt über einen Anschlagabschnitt 18 und einen Querschnittsanpassungsbereich 20 ein dem Wellrohr abgewandeter Abschnitt 12 an, an den ein Haushaltsgerät wasserdicht angeschlossen werden kann. Natürlich können derartige Anschlüsse auch innerhalb von Haushaltsgeräten bzw. Küchengeräten verwendet werden, etwa um eine Pumpe an dem Waschraum einer Waschmaschine anzuschließen, oder dgl.

Am Innenumfang des wellrohrseitigen Anschlussstutzens 10 sind radial einwärts ragende Erstreckungen 16 vorgesehen, die in die Wellungen des Wellrohres 14 eingreifen.

In der Darstellung sind die Erstreckungen 16 in einer Anzahl vorgesehen, so dass alle zwei Wellungen des Wellrohres eine Erstreckung über den gesamten Innenumfang des Anschlussstutzens 10 ausgebildet ist. Festzuhalten bleibt, dass einzelne der Erstreckungen 16 auch lediglich über einen Teilumfang erstreckt sein können, um die gewünschte mechanische Haltefunktion erfüllen zu können. Andere der Erstreckungen 16 können über den gesamten Umfang erstreckt sein, um zur gewünschten Dichtfunktion beitragen zu können.

Die Anschlusseinrichtung kann aus einem gummiartigen Material, z.B. TPE, hergestellt sein, während das Wellrohr beispielsweise aus PE, PP oder einer Mischung daraus oder einem anderen Kunststoff hergestellt sein kann. Auch die Anschlusseinrichtung kann aus PE oder einem anderen Kunststoff hergestellt sein.

Der Innenumfang des Anschlussstutzens 10 kann exakt zu dem Außenumfang des Wellrohres 14 passend ausgebildet sein, so dass auch über den Außenrand der Wellungen eine Dichtfunktion aufgebracht werden kann. Diese Dichtfunktion kann noch gesteigert werden, wenn der Außenumfang der Wellenberge des Wellrohres 14 etwas größer ist, als der Innenumfang des Anschlussstutzens 10. Auf diese Weise kann eine radial einwärts bzw. auswärts wirkende Flächenpressung noch zu der gewünschten Dichtfunktion beitragen.

Ferner kann am vom Wellrohr abgewandeten Ende des Abschnittes 12 noch eine Struktur 22 ausgebildet sein, um die Haltefunktion des Abschnittes 12 an einem beliebigen Haushaltsgerät besser gewährleisten zu können.

In Fig. 2 ist eine weitere Ausführungsform gemäß der Erfindung dargestellt, bei der jedem Wellental des Wellrohres 14 eine radial einwärts ragende Erstreckung 16 zugeordnet worden ist. Lediglich den beiden letzten Wellenbergen in Aufschubrichtung ist keine Erstreckung zugeordnet. An der Einführungsöffnung des Anschlussstutzens 10 ist ein Erweiterungsbereich 11 vorgesehen, der das Einführen des Wellrohres in den Anschlussstutzen 10 erleichtern soll.

Der Innenumfang 12a des von dem Wellrohr 14 abgewandten Abschnitts 12 kann ausgebildet sein, um auf einem entsprechenden, passend ausgebildeten Anschlussabschnitt einer Pumpe, eines Waschraumes, eines Abflussstutzens oder dgl. aufgeschoben zu werden. Der Anschlag 18 kann auch in Richtung des Abschnittes 12 so ausgebildet sein, dass sich ein Anschlagabschnitt ergibt, wobei sich zwischen diesen beiden Anschlagabschnitten der Querschnittsanpassungsabschnitt bzw. Strömungsanpassungsabschnitt erstrecken kann.

In Fig. 3 ist die Ausbildung der radial einwärts gerichteten Erstreckung 16 besser erkennbar, die am Innenumfang des wellrohrseitigen Anschlussstutzens 10 ausgebildet sind. Die Erstreckungen 16 sind hier mit zwei Schrägen ausgebildet, die beide den gleichen Winkel zur Mittelachse des Anschlussstutzens 10 aufweisen.

In der Darstellung ist zu erkennen, dass die Erstreckungen 16 seitlich nicht an den Flanken der Wellungen 14a anliegen. Sollen die Erstreckungen 16 zusätzlich eine weitere Dichtkraft entfalten, wäre es günstig, wenn die abgeschrägten Flanken der Erstreckungen 16 an dem diesen jeweils zugeordneten Wellungsflanken anliegen würden. Allerdings kann auch bereits die Anlage zwischen den Wellenbergen und dem Innenumfang des Anschlussstutzens 10 den gewünschten Dichteffekt erbringen.

Wie zu erkennen ist, sind die Erstreckungen 16 nur bis zu einem relativ geringen Ausmaß in die Wellentäler zwischen den Wellungen 14a erstreckt. Bevorzugt sollten die Erstreckungen 16 wenigstens soweit in die Wellentäler erstreckt sein, dass die radial einwärts ragenden Spitzen der Erstreckungen 16 bis in einen Bereich erstreckt sind, wo die Wellungsflanken bereits wenigstens angenähert senkrecht zur Mittellängsachse des Wellrohres sind. Das Verhältnis der radial einwärts erstreckten Dimension der Erstreckung 16 in Bezug auf die Wellentaltiefe sollte ca. 1:2 bis 1:6 betragen, um die erforderliche Haltefunktion aufbringen zu können. Falls die Erstreckungen 16 mit zur Dichtfunktion beitragen sollen, sollten sie in Axialrichtung eine Breite aufweisen, die angenähert der Breite der Täler entspricht bzw. etwas größer ist als die Breite der Wellentäler.

Um zwei oder mehr Endloswellrohre erfindungsgemäß zu verbinden, kann eine entsprechende Anschlusseinrichtung natürlich auch mit zwei oder mehr Anschlussstutzen 10 ausgestattet sein.

## Patentansprüche

1. Anschlusseinrichtung zum wasserdichten Anschließen eines Wellrohres bezüglich eines Haushaltsgerätes, wobei die Anschlusseinrichtung aufweist,
- einen wellrohrseitigen Anschlussstutzen (10);
- einen von dem Wellrohr (14) abgewandten Abschnitt (12);
wobei
mehrere innenumfänglich am wellrohrseitigen Anschlussstutzen (10) radial einwärts weisende Erstreckungen (16) vorgesehen sind, wobei einzelne der Erstreckungen (16) über den gesamten Innenumfang des Anschlussstutzens (10) ausgebildet sind und einzelne der Erstreckungen (16) lediglich über einen Teilumfang des Anschlussstutzens (10) erstreckt sind, wobei die Erstreckungen (16) in wenigstens einige der Wellentäler des Wellrohres (14) hineinragen, **dadurch gekennzeichnet, dass** die Erstreckungen (16) sowohl in Aufschubrichtung als auch entgegengesetzt dazu schräge Flanken aufweisen, wobei die Erstreckungen (16) mit zwei Schrägen ausgebildet sind, die beide den gleichen Winkel zur Mittelachse des Anschlussstutzens (10) aufweisen.

2. Anschlusseinrichtung nach Anspruch 1, **dadurch gekennzeichnet, dass** die Erstreckungen (16) in Axialrichtung des Anschlussstutzens (10) so dimensioniert sind, dass diese auf wenigstens einer, bevorzugt beiden Seiten eines Wellentales des Wellrohres (14) an den Wellungsflanken anliegen.

3. Anschlusseinrichtung nach, Anspruch 1 oder 2, **dadurch gekennzeichnet, dass** der Innenumfang des Anschlussstutzens (10) ≤ dem Außenumfang des Wellrohres (14) ist.

4. Anschlusseinrichtung nach einem der Ansprüche 1 bis 4, **dadurch gekennzeichnet, dass** die Erstreckungen (16) in der Axialrichtung der Form der Wellungsflanken des Wellrohres (14) angenähert bzw. angepasst sind.

5. Anschlusseinrichtung nach einem der Ansprüche 1 bis 4, **dadurch gekennzeichnet, dass** die Erstreckungen (16) so geformt sind, dass diese die Wellungen (14a) wenigstens im Wesentlichen wenigstens in Axialrichtung des Wellrohres (14) bereichsweise ausfüllen.

6. Anschlusseinrichtung nach einem der Ansprüche 1 bis 4, **dadurch gekennzeichnet, dass** zwischen dem Wellrohr (14) abgewandten Abschnitt (12) und dem Anschlussstutzen (10) ein Anschlagabschnitt (18) ausgebildet ist.

7. Anschlusseinrichtung nach Anspruch 6, **dadurch gekennzeichnet, dass** der Anschlagabschnitt (18) einen Querschnittsanpassungsbereich (20) aufweist, der den Querschnitt des Anschlussstutzens (10) vorzugsweise strömungsgünstig an den dem Wellrohr (14) abgewandten Abschnitt (12) anpasst.

8. Anschlusseinrichtung nach einem der Ansprüche 1 bis 7, **dadurch gekennzeichnet, dass** der dem Wellrohr abgewandte Abschnitt (12) eine Verbindungskontur aufweist, etwa eine Rastschulter (22), ein Verhakungsprofil und/oder dgl.

9. Anordnung einer Anschlusseinrichtung (10,12) und eines Endloswellrohres (14), **gekennzeichnet durch** eine Anschlusseinrichtung nach einem der Ansprüche 1 bis 8 und ein Endloswellrohr (14) beliebiger Länge.

10. Verwendung eines wasserführenden Endloswellrohres (14) zur Herstellung einer wasserdichten Verbindung bei Haushaltsgeräten mit einer Anschlusseinrichtung nach einem der Ansprüche 1 bis 8.

## Claims

1. Connector for the water-tight connection of a corrugated pipe to a household device, wherein the connector comprises
- a connection socket (10) on the corrugated pipe side;
- a section (12) remote from the corrugated pipe (14);
wherein
a plurality of extensions (16) which point radially inwards are provided on the inner circumference of the connection socket (10) on the corrugated pipe side, wherein some of the extensions (16) are formed over the entire inner circumference of the connection socket (10) and some of the extensions (16) are formed only over part of the circumference of the connection socket (10), wherein the extensions (16) project into at least some of the valleys of the corrugated pipe (14), **characterised in that** the extensions (16) have inclined flanks both in the insertion direction and in the direction opposite thereto, wherein the extensions (16) are formed with two inclined surfaces which are both at the same angle with respect to the centre axis of the connection socket (10).

2. Connector according to Claim 1, **characterised in that** the extensions (16) in the axial direction of the connection socket (10) are dimensioned in such a way that they bear against the corrugation flanks on at least one side, preferably both sides, of a valley of the corrugated pipe (14).

3. Connector according to Claim 1 or 2, **characterised in that** the inner circumference of the connection socket (10) is ≤ the outer circumference of the corrugated pipe (14).

4. Connector according to one of Claims 1 to 4, **characterised in that** the extensions (16) in the axial direction are approximated or matched to the shape of the corrugation flanks of the corrugated pipe (14).

5. Connector according to one of Claims 1 to 4, **characterised in that** the extensions (16) are shaped in such a way that they at least essentially fill the corrugations (14a) in some sections at least in the axial direction of the corrugated pipe (14).

6. Connector according to one of Claims 1 to 4, **characterised in that** a stop section (18) is formed between the section (12) remote from the corrugated pipe (14) and the connection socket (10).

7. Connector according to Claim 6, **characterised in that** the stop section (18) has a cross section adapting region (20) which adapts the cross section of the connection socket (10) to the section (12) remote from the corrugated pipe (14) in a streamlined manner.

8. Connector according to one of Claims 1 to 7, **characterised in that** the section (12) remote from the corrugated pipe has a connecting contour, for example a latching shoulder (22), a hook profile and/or the like.

9. Arrangement of a connector (10, 12) and of a continuous corrugated pipe (14), **characterised by** a connector according to one of Claims 1 to 8 and a continuous corrugated pipe (14) of any length.

10. Use of a water-conveying continuous corrugated pipe (14) to produce a water-tight connection for household devices with a connector according to one of Claims 1 to 8.

## Revendications

1. Dispositif de raccordement destiné à réaliser le branchement ou raccordement d'un tube annelé à un appareil électroménager d'une manière étanche à l'eau, le dispositif de raccordement présentant
- un embout de raccordement (10) situé du côté tube annelé ;
- un tronçon (12) situé du côté opposé à celui où se trouve le tube annelé (14) ;
et plusieurs proéminences (16) dirigées radialement vers l'intérieur étant prévues sur la périphérie intérieure de l'embout de raccordement (10) situé côté tube annelé, certaines des proéminences (16) individuelles étant formées sur la totalité de la périphérie intérieure de l'embout de raccordement (10) et certaines des proéminences (16) individuelles s'étendant uniquement sur une partie de la périphérie de l'embout de raccordement (10), et lesdites proéminences (16) s'engageant dans au moins quelques uns des creux d'ondes du tube annelé (14), **caractérisé en ce que** les proéminences (16) présentent, aussi bien dans la direction d'emmanchement que de manière opposée à celle-ci, des flancs inclinés, les proéminences (16) étant réalisées avec deux rampes inclinées qui présentent chacune le même angle par rapport à l'axe central de l'embout de raccordement (10).

2. Dispositif de raccordement selon la revendication 1, **caractérisé en ce que** les proéminences (16) sont dimensionnées, dans la direction axiale de l'embout de raccordement (10), de manière à s'appuyer sur les flancs d'onde sur l'un au moins et de préférence sur les deux côtés d'un creux d'onde du tube annelé (14).

3. Dispositif de raccordement selon les revendications 1 ou 2, **caractérisé en ce que** le périmètre intérieur de l'embout de raccordement (10) est ≤ au périmètre extérieur du tube annelé (14).

4. Dispositif de raccordement selon l'une des revendications 1 à 3, **caractérisé en ce que** les proéminences (16) sont adaptées à la forme des flancs d'ondes du tube annelé (14) ou se rapprochent de cette forme, dans la direction axiale.

5. Dispositif de raccordement selon l'une des revendications 1 à 4, **caractérisé en ce que** les proéminences (16) sont formées de façon à combler au moins sensiblement dans certaines zones les ondulations (14a), au moins dans la direction axiale du tube annelé (14).

6. Dispositif de raccordement selon l'une des revendications 1 à 4, **caractérisé en ce qu'**entre le tronçon (12) situé du côté opposé à celui où se trouve le tube annelé (14) et l'embout de raccordement (10), est formé un tronçon de butée (18).

7. Dispositif de raccordement selon la revendication 6, **caractérisé en ce que** le tronçon de butée (18) présente une zone d'adaptation de section transversale (20), qui adapte, de préférence d'une manière favorable à l'écoulement, la section transversale de l'embout de raccordement (10) à celle du tronçon (12) situé du côté opposé à celui où se trouve le tube annelé (14).

8. Dispositif de raccordement selon l'une des revendications 1 à 7, **caractérisé en ce que** le tronçon (12) situé du côté opposé à celui où se trouve le tube annelé, présente un contour d'assemblage ou de liaison, à savoir sensiblement un épaulement ou une collerette d'encliquetage (22), un profil d'accrochage et/ou un élément similaire.

9. Agencement d'un dispositif de raccordement (10, 12) et d'un tube annelé sans fin (14), **caractérisé par** un dispositif de raccordement selon l'une des revendications 1 à 8 et un tube annelé sans fin (14) d'une longueur quelconque.

10. Utilisation d'un tube annelé sans fin (14) d'acheminement d'eau pour la réalisation d'un branchement ou raccordement étanche à l'eau dans des appareils électroménagers, à l'aide d'un dispositif de raccordement selon l'une des revendications 1 à 8.
